# EUROPEAN PATENT APPLICATION

(11) **EP 4 586 435 A1**
(43) Date of publication of application: **16.07.2025**
(21) Application number: 22960595.1
(22) Date of filing: 25.11.2022
(51) Int. Cl.: H02J 3/14

(54) **PHOTOVOLTAIC ELECTRIC ENERGY CONSUMPTION METHOD AND APPARATUS, AND DEVICE AND STORAGE MEDIUM**

(30) Priority: 27.09.2022 CN 202211186063
(71) Applicant: Midea Group Co., Ltd., Foshan, Guangdong 528311 (CN); GD Midea Air-Conditioning Equipment Co., Ltd., Foshan, Guangdong 528311 (CN)
(72) Inventor: HUANG, Zhaobin, Foshan, Guangdong 528311 (CN); LV, Mengxin, Foshan, Guangdong 528311 (CN); JIANG, Haihao, Foshan, Guangdong 528311 (CN); ZHU, Baisheng, Foshan, Guangdong 528311 (CN); ZENG, Xianjie, Foshan, Guangdong 528311 (CN); QIU, Yu, Foshan, Guangdong 528311 (CN); ZHAI, Weigang, Foshan, Guangdong 528311 (CN); LI, Zhiyong, Foshan, Guangdong 528311 (CN)
(74) Representative: Ran, Handong
(86) International application number: PCT/CN2022/134469
(87) International publication number: WO 2024/065998

(57) **Abstract**

The present application belongs to the technical field of electrical control. Disclosed are a photovoltaic electric energy consumption method and apparatus, and a device and a storage medium. The method comprises: acquiring current time information; determining a photovoltaic power generation time period and a power-grid power supply time period according to the current time information; determining a load object and an electric-energy strategy according to the photovoltaic power generation time period and/or the power-grid power supply time period; and according to the electric energy strategy, controlling the load object to complete photovoltaic electric energy consumption and/or power-grid power utilization control.

## Description

This application claims priority to Chinese Patent Application No. 202211186063.1 filed on September 27, 2022, the entire contents of which are incorporated herein by reference.

### TECHNICAL FIELD

The present application relates to the technical field of electrical control, and in particular to a method, an apparatus, a device for accommodating photovoltaic power, and a storage medium.

### BACKGROUND

Currently, photovoltaic power generation has become deeply integrated into households, serving as an important source of electricity in daily life. It is not only cost-effective but also clean and environmentally friendly.

However, the greatest drawback of photovoltaic power generation is its instability, as it is heavily influenced by weather conditions and time. Therefore, the timing and output of power generation are uncontrollable. In household scenarios, the use of electrical appliances is affected by human factors and household electricity usage plans, resulting in a mismatch between photovoltaic power generation time and electricity usage time. Moreover, the overlap between public grid peak electricity demand and household peak load leads to significantly high electricity prices. Consequently, how to utilize household photovoltaic power generation more reasonably has become a pressing technical problem to be solved.

The above contents are only used to assist in understanding the technical solution of the present application and do not constitute an admission that the above contents are prior art.

### SUMMARY

### TECHNICAL PROBLEM

The main objective of the present application is to provide a method, an apparatus, a device for accommodating photovoltaic power, and a storage medium, aiming at solving the technical problem of how to reasonably manage household energy in the related art.

### TECHNICAL SOLUTION

In order to achieve the above objective, the present application provides a method for absorbing photovoltaic power, the method including the following steps:
obtaining current time information;
determining a photovoltaic power generation period and a grid power supply period according to the current time information;
determining a load object and an electric energy strategy according to the photovoltaic power generation period and/or the grid power supply period; and
controlling the load object according to the electric energy strategy to complete photovoltaic power accommodation and/or grid power consumption control.

In an embodiment, the determining the load object and the electric energy strategy according to the photovoltaic power generation period and/or the grid power supply period includes:
in response to that the photovoltaic power generation period is a photovoltaic effective period, determining a first electric energy strategy and a first load object according to the current time information; and
the controlling the load object according to the electric energy strategy to complete photovoltaic power accommodation and/or grid power consumption control includes:
   controlling the first load object according to the first electric energy strategy to complete photovoltaic power accommodation.

In an embodiment, the in response to that the photovoltaic power generation period is the photovoltaic effective period, determining the first electric energy strategy and the first load object according to the current time information includes:
in response to that the photovoltaic power generation period is the photovoltaic effective period, obtaining current photovoltaic power generation information and current load information; and
determining the first electric energy strategy according to the photovoltaic power generation information and the current load information.

In an embodiment, the first load object includes a heat pump water heater, and
the determining the first electric energy strategy according to the photovoltaic power generation information and the current load information includes:
determining first photovoltaic surplus information according to the photovoltaic power generation information and the current load information; and
in response to that the first photovoltaic surplus information indicates a photovoltaic surplus, determining the first electric energy strategy according to the first photovoltaic surplus information and startup or operation condition information of the heat pump water heater, the first electric energy strategy includes whether to start the heat pump water heater.

In an embodiment, the photovoltaic effective period includes at least one of a photovoltaic power generation growth period, a photovoltaic power generation high-efficiency period, and a photovoltaic power generation decay period, and
the determining the first electric energy strategy according to the first photovoltaic surplus information and the startup or operation condition information of the heat pump water heater includes:
in response to starting the heat pump water heater:
during the photovoltaic power generation growth period, determining a first operation strategy of the heat pump water heater according to preset parameters of the heat pump water heater, and determining a second operation strategy of the heat pump water heater according to maximum parameters of the heat pump water heater after reaching the preset parameters of the heat pump water heater;
during the photovoltaic power generation high-efficiency period, determining a third operation strategy of the heat pump water heater according to the maximum parameters of the heat pump water heater; and
the determining the first electric energy strategy according to the photovoltaic power generation information and the current load information further includes:
   during the photovoltaic power generation decay period, stopping photovoltaic power accommodation for the heat pump water heater.

In an embodiment, in response to that the photovoltaic power generation period is the photovoltaic effective period, determining the first electric energy strategy according to the current time information includes:
during the photovoltaic power generation high-efficiency period, obtaining a state of the first load object;
in response to that the state of the first load object is not in the maximum power state, setting the target operating parameters of the first load object; and
generating a first power strategy according to the first load object state information and the target operating parameters of the first load object.

In an embodiment, the first load object further includes a migratable load, and the migratable load includes at least one of an energy storage load and a consumption load; and
the determining the first electric energy strategy according to the first photovoltaic surplus information and the startup or operation condition information of the heat pump water heater includes: during the photovoltaic power generation high-efficiency period:
determining second photovoltaic surplus information according to the first photovoltaic surplus information and the startup or operation condition information of the heat pump water heater; and
in response to that the second photovoltaic surplus information indicates a photovoltaic surplus, determining the first electric energy strategy according to the second photovoltaic surplus information and startup or operation condition information of the migratable load, the first electric energy strategy includes whether to start the migratable load.

In an embodiment, the determining the first electric energy strategy according to the photovoltaic power generation information and the current load information further includes:
during the photovoltaic power generation growth period, stopping photovoltaic power accommodation for the migratable load; and
during the photovoltaic power generation decay period, in response to that the first photovoltaic surplus information indicates a photovoltaic surplus, determining the first electric energy strategy according to the first photovoltaic surplus information and the startup or operation condition information of the migratable load, the first electric energy strategy includes whether to start the migratable load.

In an embodiment, the determining the first electric energy strategy according to the second photovoltaic surplus information and the startup or operation condition information of the migratable load includes:
in response to that the migratable load is an energy storage load, determining a fourth operation strategy of the energy storage load according to the second photovoltaic surplus information and rated operation parameters of the energy storage load;
in response to that the migratable load is a consumption load, determining a fifth operation strategy of the consumption load according to the second photovoltaic surplus information, operation parameters of the consumption load, and planned power consumption of the consumption load; and
in response to that the migratable load is both a consumption load and an energy storage load, determining a sixth operation strategy of the consumption load according to the second photovoltaic surplus information, the operation parameters of the consumption load, and the planned power consumption of the consumption load; determining third photovoltaic surplus information according to the second photovoltaic surplus information and the operation parameters of the consumption load; and in response to that the third photovoltaic surplus information indicates a photovoltaic surplus, determining a seventh operation strategy of the energy storage load according to the third photovoltaic surplus information and the rated operation parameters of the energy storage load.

In an embodiment, the determining the load object and the electric energy strategy according to the photovoltaic power generation period and/or the grid power supply period includes:
in response to that the photovoltaic power generation period is a photovoltaic invalid period and the grid power supply period is a normal power supply period, determining a second electric energy strategy and a second load object according to the current time information; and
the controlling the load object according to the electric energy strategy to complete photovoltaic power accommodation and/or grid power consumption control includes:
   controlling the second load object according to the second electric energy strategy to complete grid power consumption control.

In an embodiment, the determining the second electric energy strategy and the second load object according to the current time information includes:
determining power demand information and grid time period information of the second load object according to the current time information; and
determining the second electric energy strategy according to the power demand information and the grid time period information.

In an embodiment, the determining the power demand information and the grid time period information of the second load object according to the current time information includes:
obtaining photovoltaic power accommodation information of the second load object and determining the power demand information according to photovoltaic power accommodation information of the second load object.

In an embodiment, the determining the second electric energy strategy according to the power demand information and the grid time period information includes:
in response to that the grid time period information indicates a grid parity period or a grid valley period, determining the second electric energy strategy according to usage information of the second load object.

In an embodiment, the second load object includes at least one of a heat pump water heater, a migratable energy storage load, and a migratable consumption load; and
the determining the second electric energy strategy according to the usage information of the second load object includes:
in response to that the second load object is a heat pump water heater and/or a consumption load, determining an eighth operation strategy of the second load object during the grid parity period according to the usage information of the second load object; and
in response to that the second load object is an energy storage load, determining a ninth operation strategy of the second load object during the grid valley period according to the usage information of the second load object.

In addition, in order to achieve the above objective, the present application further provides an apparatus for accommodating photovoltaic power, the apparatus for accommodating photovoltaic power including:
an acquisition module, configured to obtain current time information;
a processing module, configured to determine a photovoltaic power generation period and a grid power supply period according to the current time information, and
the processing module, further configured to determine a load object and an electric energy strategy according to the photovoltaic power generation period and/or the grid power supply period; and
a control module, configured to control the load object to complete photovoltaic power accommodation and/or grid power consumption control according to the electric energy strategy.

In addition, in order to achieve the above objective, the present application further provides a device for accommodating photovoltaic power, including: a memory, a processor, and a program for accommodating photovoltaic power stored in the memory and executable on the processor, and the program for accommodating photovoltaic power is configured to implement the steps of the method for accommodating photovoltaic power described above.

In addition, in order to achieve the above objective, the present application further provides a storage medium, on which a program for accommodating photovoltaic power is stored. When the program for accommodating photovoltaic power is executed by a processor, the steps of the method for accommodating photovoltaic power described above are implemented.

### TECHNICAL EFFECT

The present application obtains current time information; determines photovoltaic power generation period and grid power supply period according to the current time information; determines load objects and electric energy strategies according to the photovoltaic power generation period and/or the grid power supply period; and controls the load objects to complete electric energy consumption and/or electric energy migration according to the electric energy strategy. Through the above solution, time is associated with power generation and power consumption, and then the household power load is controlled with time as the control parameter, so that the household power load matches the power generation and grid power supply to achieve the best results in energy saving and economy, achieve the goal of energy saving, and improve the economy of household electricity consumption.

### BRIEF DESCRIPTION OF THE DRAWINGS

FIG. 1 is a schematic structural diagram of a device for accommodating photovoltaic power in a hardware operating environment according to an embodiment of the present application.
FIG. 2 is a schematic flowchart of the method for accommodating photovoltaic power according to a first embodiment of the present application.
FIG. 3 is a schematic diagram of a household electricity structure of the method for accommodating photovoltaic power according to an embodiment of the present application.
FIG. 4 is a schematic flowchart of the method for accommodating photovoltaic power according to a second embodiment of the present application.
FIG. 5 is a schematic flowchart of the method for accommodating photovoltaic power according to the second embodiment of the present application.
FIG. 6 is a structural block diagram of an apparatus for accommodating photovoltaic power according to a first embodiment of the present application.

The realization of the purposes, functional features and advantages of the present application will be further explained with reference to the accompanying drawings in combination with the embodiments.

### DETAILED DESCRIPTION OF THE EMBODIMENTS

It should be understood that the specific embodiments described herein are only used to explain the present application and are not used to limit the present application.

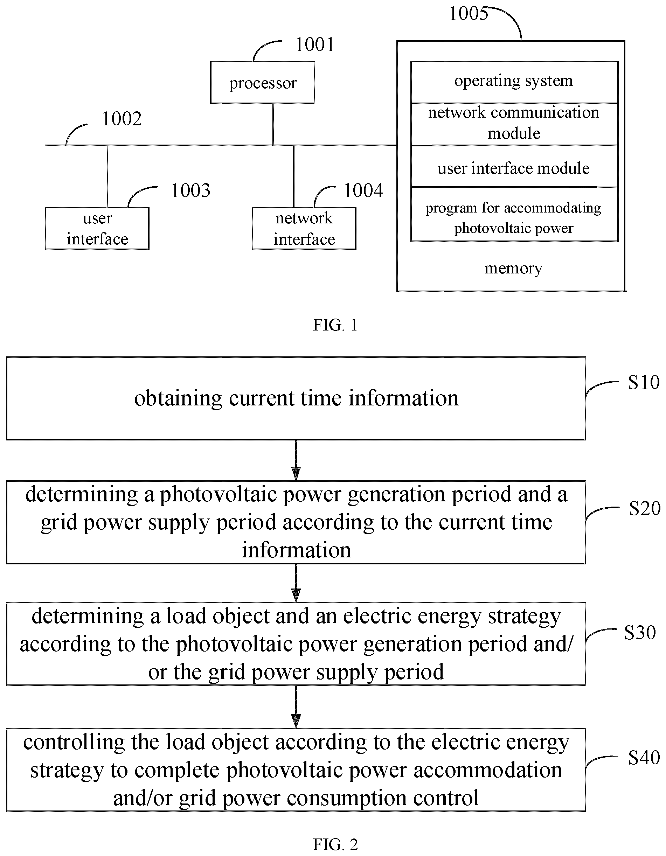

As shown in FIG. 1, which is a schematic structural diagram of a device for accommodating photovoltaic power in a hardware operating environment according to an embodiment of the present application.

As shown in FIG. 1, the device for accommodating photovoltaic power may include: a processor 1001, such as a central processing unit (CPU), a communication bus 1002, a user interface 1003, a network interface 1004, and a memory 1005. The communication bus 1002 is used to realize the connection and communication between these components. The user interface 1003 may include a display screen, an input unit such as a keyboard, and the user interface 1003 may also include a standard wired interface and a wireless interface. The network interface 1004 may include a standard wired interface and a wireless interface (such as a wireless fidelity (Wi-Fi) interface). The memory 1005 may be a high-speed random-access memory (RAM), or a stable non-volatile memory (NVM), such as a disk memory. The memory 1005 may also be a storage device independent of the aforementioned processor 1001.

Those skilled in the art will understand that the structure shown in FIG. 1 does not constitute a limitation on the device for accommodating photovoltaic power, and may include more or fewer components than shown in the figure, or a combination of certain components, or a different arrangement of components.

As shown in FIG. 1, the memory 1005 as a storage medium may include an operating system, a network communication module, a user interface module, and a program for accommodating photovoltaic power.

In the device for accommodating photovoltaic power shown in FIG. 1, the network interface 1004 is mainly used for data communication with the network server; the user interface 1003 is mainly used for data interaction with the user; the processor 1001 and the memory 1005 in the device for accommodating photovoltaic power of the present application can be set in the device for accommodating photovoltaic power, and the device for accommodating photovoltaic power calls the program for accommodating photovoltaic power stored in the memory 1005 through the processor 1001, and executes the method for accommodating photovoltaic power provided in the embodiment of the present application.

An embodiment of the present application provides a method for accommodating photovoltaic power. As shown in FIG. 2, FIG. 2 is a schematic flowchart of the method for accommodating photovoltaic power according to a first embodiment of the present application.

In an embodiment, the method for accommodating photovoltaic power includes the following steps:
Step S10: obtaining current time information.

It should be noted that the executive entity of the present application may be an energy management system, which may be provided in a smart energy manager, in an intelligent power management device, or in other devices with the same or similar functions as the smart energy manager. The present application does not limit this, and only uses the smart energy manager as the form of expression of the executive entity for explanation.

It should be noted that the present application is applied to household electricity consumption scenarios. Due to the difference between household photovoltaic power generation and actual household electricity consumption time, when there is no energy storage equipment in the home, the power generation efficiency and power load cannot be matched, resulting in the loss of excess electricity. For example: generally, the time period with the highest efficiency of photovoltaic power generation is the morning, noon and afternoon when the sun is abundant, but the actual peak electricity consumption is often at night, which results in the waste of power generation during the day and users can only rely on grid power supply for large amounts of electricity demand at night, which is not economical. Therefore, in order to solve this problem, this solution proposes to adjust the household electricity consumption plan according to the time period to ensure that the power supply level of photovoltaic or public power grid at the power supply end can achieve a high economy, and photovoltaic power generation can be used up as much as possible to reduce the abandonment or grid-tie of photovoltaic power generation.

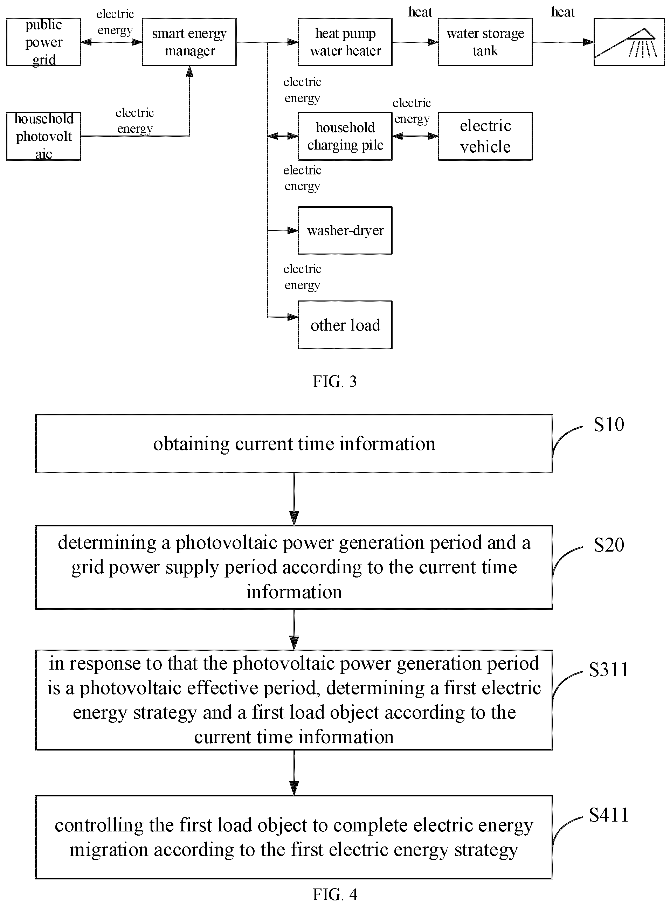

It should be noted that the usage scenario of the present application can be as shown in FIG. 3. The smart energy manager controls the switching or use of the two power supply ends, the public power grid and the user's photovoltaic power supply, and then distributes the electricity to different electrical appliances. The smart energy manager can also send control parameters to the electrical appliances to change the power consumption plan and working status of each appliance.

It can be understood that the current time information is the time corresponding to the current moment or the time period of the day in which the currently scheduled time is located. The purpose of obtaining the current time information is that the photovoltaic power generation power actually depends on the degree of sunlight exposure, which has a strong correlation with the time distribution.

In addition, time is also strongly correlated with the power supply of the power grid. For example, the electricity price distribution in many regions is as follows: the power grid parity electricity price period: 10:00 a.m. - 12:00 p.m., 14:00 p.m. - 19:00 p.m.; the power grid peak electricity price period: 08:00a.m. - 10:00a.m., 12:00 p.m. - 14:00 p.m., 19:00 p.m. - 24:00 p.m.; and the power grid valley electricity price period: 00:00a.m. - 08:00a.m. By reasonably adjusting the electricity consumption plan in combination with the power grid electricity price, high economic efficiency of household electricity consumption can be achieved.

Step S20: determining a photovoltaic power generation period and a grid power supply period according to the current time information.

It should be noted that the photovoltaic power generation period can be determined according to the current time information in comparison with the photovoltaic power generation situation, and the photovoltaic power generation period can be divided into an effective power generation period (such as daytime) and an ineffective power generation period (such as nighttime). In the effective power generation period, the photovoltaic power generation growth stage, photovoltaic power generation high efficiency stage and photovoltaic power generation decay stage can be determined according to the photovoltaic power generation power situation. For example: in many regions, the photovoltaic power generation power is in the photovoltaic power generation growth stage from 06:00 a.m. to 18:00 p.m., 10:00 a.m. to 14:00 p.m. is the photovoltaic power generation high efficiency stage, and 14:00 p.m. to 18:00 p.m. is the photovoltaic power generation decay stage. Photovoltaic power generation power gradually increases in the growth stage, which can be a fluctuating growth or a steady growth; the photovoltaic power generation power can be higher than the preset threshold value in the high efficiency stage. The photovoltaic power generation power gradually decreases in the decay stage, which can be a fluctuating decline or a steady decline. The growth stage, high efficiency stage, and decay stage are generally provided in timing order. According to the weather conditions of the day, the photovoltaic power generation power of the day may be in one, two or three of the growth stage, high efficiency stage and decay stage, or may be in multiple growth stages, multiple high efficiency stages or multiple decay stages. In an embodiment, the process of determining the photovoltaic power generation period can obtain historical photovoltaic power generation information, perform statistics according to the historical photovoltaic power generation information, determine the photovoltaic power generation law, and then use the photovoltaic power generation time as the criterion for determining the effective power generation period and the invalid power generation period, or the photovoltaic power generation period can be determined according to the photovoltaic power generation law and the weather forecast of the day.

In addition, the power supply period of the power grid is the pricing information of the power grid in different periods in the current region. For example, the pricing information of the power grid in a certain place is the power grid parity price period: 10:00 a.m. - 12:00 p.m., 14:00 p.m. - 19:00 p.m.; the power grid peak price period: 08:00 a.m. - 10:00 a.m., 12:00 p.m. - 14:00 p.m., 19:00 p.m. - 24:00 p.m.; the power grid valley price period: 00:00 a.m. - 08:00 a.m. Then, the electricity consumption can be adjusted according to the power supply period of the power grid, and other loads (such as vehicle charging, water heater hot water, etc.) except the necessary loads (such as lighting, refrigeration, cooking electricity, etc.) can be adjusted in the period with lower electricity prices.

In an embodiment, the time planning of photovoltaic power generation period and grid power supply period does not conflict, and the photovoltaic power generation period and grid power supply period can overlap with each other. For example: grid parity electricity price period: 10:00 a.m. - 12:00 p.m. but 10:00 a.m. - 12:00 p.m. is also an efficient power generation period.

Step S30: determining a load object and an electric energy strategy according to the photovoltaic power generation period and/or the grid power supply period.

It can be understood that the load can be controlled for targeted use according to the photovoltaic power generation period or the grid power supply period. The object to be controlled is the load object, and the logic of control is the electric energy strategy. The electric energy strategy can be, for example: when photovoltaic power generation is sufficient, the load with energy preparation stage is used as much as possible. For example, hot water needs to be heated before the water heater is used, then it has an energy preparation stage and electric vehicle charging, electrical appliance preheating and pre-starting, etc., so that the electricity generated by photovoltaic power is used as much as possible to avoid waste. On the other hand, when photovoltaic power generation cannot be supported or cannot be fully supported, the above functions are realized as much as possible when the electricity price is cheap to ensure the economy of electricity use.

The load object may be found according to the electric energy strategy, or may be directly obtained according to a mapping table of correspondence between the time and the load object set by the user, and the present application does not impose any limitation on this.

Step S40: controlling the load object according to the electric energy strategy to complete photovoltaic power accommodation and/or grid power consumption control.

It should be noted that the load object can be controlled according to the electric energy strategy. For example, in the daytime scene with abundant sunlight, the photovoltaic power generation is sufficient. The electric energy strategy can be according to the energy consumption plan of heat pump water heaters, washer-dryers, and electric vehicles. Heat pump water heaters mainly operate during the peak electricity price period of the night power grid. Therefore, when photovoltaic power generation is in the daytime, after meeting the daily immediate load demand, the photovoltaic power generation is stored in the heat pump water heater through electric-to-heat conversion to supply hot water at night, thereby reducing the energy consumption during the household peak electricity price period and reducing the household electricity cost. If there is still a surplus of photovoltaic power afterwards, the reserved energy load will be migrated to the photovoltaic maximum power generation period (10:00 a.m. - 14:00 p.m.) for energy consumption. If there is still a surplus of photovoltaic power after meeting these needs, the grid-tie will be performed.

The present application obtains current time information; determines photovoltaic power generation period and grid power supply period according to the current time information; determines load objects and electric energy strategies according to the photovoltaic power generation period and/or the grid power supply period; and controls the load objects to complete electric energy consumption and/or electric energy migration according to the electric energy strategy. Through the above solution, time is associated with power generation and power consumption, and then the household power load is controlled with time as the control parameter, so that the household power load matches the power generation and grid power supply to achieve the best results in energy saving and economy, achieve the goal of energy saving, and improve the economy of household electricity consumption.

As shown in FIG. 4, which is a schematic flowchart of the method for accommodating photovoltaic power according to a second embodiment of the present application.

Based on the first embodiment described above, the step S30 of the method for accommodating photovoltaic power of the present application further includes:
Step S311: in response to that the photovoltaic power generation period is a photovoltaic effective period, determining a first electric energy strategy and a first load object according to the current time information.

Photovoltaic power generation is generally at its maximum throughout the day, and there will be a large surplus. Therefore, this period is the most likely period of photovoltaic power generation waste throughout the day. It can be determined whether the first load object is at maximum power during this period. If it is not at maximum power, it needs to be adjusted to maximum power. The target operation parameters of the first load object are the operation parameters required to adjust the various operation parameters of the first load object to the maximum value. For example: assuming that the first load object is a heat pump water heater, then the maximum operation parameters are the operation parameters that set the heating target temperature of the heat pump water heater to the highest temperature, the operation parameters that fill the water tank, and the operation parameters that adjust the heating power to the maximum power.

It should be noted that the first electric energy strategy for electric energy migration can be generated according to the first load object state information and the target operation parameters of the first load object.

It should be understood that the process of determining the first load object can be directly obtained from the first electric energy strategy.

In some embodiments, when the photovoltaic power generation period is a photovoltaic effective period, current photovoltaic power generation information and current load information are obtained, and a first electric energy strategy is determined according to the photovoltaic power generation information and the current load information. The current load information may be daily load information, and the daily load may include conventional loads and important loads. The first electric energy strategy may include photovoltaic power generation is prioritized to meet daily load requirements.

In some embodiments, the first photovoltaic surplus information is determined according to the photovoltaic power generation information and the current load information; when the first photovoltaic surplus information is a photovoltaic surplus, the first electric energy strategy is determined according to the first photovoltaic surplus information and the startup or operation condition information of the heat pump water heater, and the first electric energy strategy includes whether to start the heat pump water heater. When photovoltaic power generation preferentially meets the daily load demand and there is still a surplus, it is determined whether to start the heat pump water heater according to the first photovoltaic surplus information and the startup or operation condition information of the heat pump water heater. For example, the difference between the photovoltaic power generation power and the daily load power, and the maximum value of the startup power and the operating power of the heat pump water heater are determined. If the difference is greater than the maximum value, the heat pump water heater is started.

In some embodiments, when the heat pump water heater is started, an operation strategy of the heat pump water heater is further determined according to the photovoltaic power generation period.

For example, during the period of photovoltaic power generation growth, the first operation strategy of the heat pump water heater is determined according to the set parameters of the heat pump water heater, and after the set parameters of the heat pump water heater are reached, the second operation strategy of the heat pump water heater is determined according to the maximum parameters of the heat pump water heater.

The set parameter may be the water temperature and/or water level of the water heater set by the user, the highest parameter may be the maximum heating water temperature and/or maximum water level of the heat pump water heater. The highest parameter is greater than the set parameter in terms of water temperature and/or water level. The first operation strategy may be that the heat pump water heater runs to the set parameter, the second operation strategy may be that the heat pump water heater further runs to the highest parameter on the basis of running to the set parameter, and the operating power of the heat pump water heater used in the first operation strategy and the second operation strategy may be the same or different. After the first operation strategy of the heat pump water heater is determined by the set parameters, before the second operation strategy of the heat pump water heater is determined according to the highest parameter of the heat pump water heater, it can be further determined whether to execute the second operation strategy according to the first photovoltaic surplus information and the operating condition information of the heat pump water heater. If the photovoltaic power of the photovoltaic surplus is greater than the operating power of the heat pump water heater, the second operation strategy can be executed. After the heat pump water heater is started during the photovoltaic power generation growth period, the heat pump water heater can continue to operate during the subsequent photovoltaic power generation high-efficiency period.

For example, during the photovoltaic power generation high-efficiency period, the third operation strategy of the heat pump water heater is determined according to the highest parameter of the heat pump water heater.

During the photovoltaic power generation high-efficiency period, the photovoltaic power generation power is relatively high, and the heat pump water heater can be operated to the highest parameters. The third operation strategy can be identical to the second operation strategy. If the heat pump water heater is not started before the photovoltaic power generation high-efficiency period, the third operation strategy of the heat pump water heater is directly determined according to the highest parameters. If the heat pump water heater has been started before the photovoltaic power generation high-efficiency period and is operated with the second operation strategy, the third operation strategy of the heat pump water heater is directly determined according to the highest parameters, and the heat pump water heater continues to operate with the second operation strategy (third operation strategy). If the heat pump water heater has been started before the photovoltaic power generation high-efficiency period and is operated with the first operation strategy, the third operation strategy of the heat pump water heater is determined according to the highest parameters, and the heat pump water heater operates with the third operation strategy after entering the photovoltaic power generation high-efficiency period.

In some embodiments, determining the first electric energy strategy according to photovoltaic power generation information and current load information further includes: during the photovoltaic power generation decay period, stopping photovoltaic power accommodation for the heat pump water heater. During the photovoltaic power generation decay period, photovoltaic power generation gradually decays and decays to a point where it cannot support the operation of the heat pump water heater. In order to avoid damage to the heat pump water heater due to frequent opening and closing, the load migration of the heat pump water heater is not considered during the photovoltaic power generation decay period.

In some embodiments, the first load object further includes a migratable load, which includes at least one of an energy storage load and a consumption load. A migratable load refers to a load whose operation time can be moved to a different time period. An energy storage load can be a load that stores electricity, such as a charging pile, a battery, etc., and a consumption load can be a washer-dryer, a clothing care machine, an electric oven, etc. The user only needs the consumption load to complete operation before the set time.

During the photovoltaic power generation high-efficiency period, after determining to start the heat pump water heater, the second photovoltaic surplus information is determined according to the first photovoltaic surplus information and the startup or operation condition information of the heat pump water heater. When the second photovoltaic surplus information is photovoltaic surplus, the first electric energy strategy is determined according to the second photovoltaic surplus information and the startup or operation condition information of the migratable load, and the first electric energy strategy includes whether to start the migratable load. For example, after determining the difference between the photovoltaic power generation power and the daily load power, the difference between the difference and the heat pump water heater operating power is the second photovoltaic surplus power, which is determined whether to meet the startup or operation conditions of the migratable load. For example, the startup condition of the energy storage load is that the second photovoltaic surplus power being greater than 0, and the startup condition of the consumption load is that the second photovoltaic surplus power being greater than the startup power of the consumption load and the photovoltaic predicted surplus power generation being greater than the planned power consumption of the consumption load. The photovoltaic predicted surplus power generation can be the difference obtained by that the photovoltaic predicted power generation for the whole day minus the daily load power consumption and the power consumption of the heat pump water heater when it is successfully started.

When starting a migratable load, the operation strategy of the migratable load may include: if the migratable load is an energy storage load, the fourth operation strategy of the energy storage load is determined according to the second photovoltaic surplus information and the rated working parameters of the energy storage load. For example, the charging power of the energy storage load can take the minimum value between the rated charging power and the second photovoltaic surplus power, so that the energy storage load charges smoothly and avoids the photovoltaic power supply fluctuation of other loads caused by the energy storage load. If the migratable load is a consumption load, the fifth operation strategy of the consumption load is determined according to the second photovoltaic surplus information, the working parameters of the consumption load and the planned power consumption of the consumption load. For example, whether the consumption load is started is determined according to whether the second photovoltaic surplus power is greater than the starting power of the consumption load and the photovoltaic predicted surplus power generation is greater than the planned power consumption of the consumption load. If the migratable load is a consumption load and an energy storage load, the sixth operation strategy of the consumption load is first determined according to the second photovoltaic surplus information, the working parameters of the consumption load and the planned power consumption of the consumption load, the consumption load is prioritized to start. The starting conditions of the energy storage load are relatively low, the startup is more flexible, the valley price electricity can be applied, and the energy storage load can be considered later. The third photovoltaic surplus information is determined according to the second photovoltaic surplus information and the working parameters of the consumption load. If the third photovoltaic surplus information is photovoltaic surplus, that is, after the photovoltaic power generation power is deducted from the daily load power, the starting or operation power of the heat pump water heater, and the starting or operation power of the consumption load, there is still a surplus in the photovoltaic power generation. The seventh operation strategy of the energy storage load is determined according to the third photovoltaic surplus information and the rated working parameters of the consumption load. The seventh operation strategy may be identical to the fourth operation strategy.

During the photovoltaic power generation growth period, accommodating photovoltaic power for migratable loads is stopped, and it is prioritized to ensure the startup or operation of heat pump water heaters.

During the photovoltaic power generation decay period, the heat pump water heater has stopped operating. When the first photovoltaic surplus information is photovoltaic surplus, that is, when it is determined that there is a surplus according to the photovoltaic power generation information and the current load information, the first electric energy strategy is determined according to the first photovoltaic surplus information and the startup or operation condition information of the migratable load. The first electric energy strategy includes whether to start the migratable load. If there is a photovoltaic surplus during the photovoltaic power generation decay period, the migratable load can be started. The operation strategy of the migratable load during the photovoltaic power generation decay period can be identical to its operation strategy during the photovoltaic power generation high-efficiency period.

Step S411: controlling the first load object to complete electric energy migration according to the first electric energy strategy.

It can be understood that the first electric energy strategy includes the first electric energy strategy used for electric energy migration. According to the electric energy migration part of the first electric energy strategy, the working parameters of the first load object are set, thereby controlling the operation of the first load object to complete the electric energy migration.

In an embodiment, the process of completing the electric energy migration according to the power policy may be, for example:
(1) During the period of 06:00 a.m. - 10:00 a.m., photovoltaic power generation gradually increases: photovoltaic power generation power Ppv ≥ Pload, and photovoltaic power generation supplies the household's immediate load energy demand. When Ppv_1 ≥ Max (Php_start, Php), the heat pump water heater is started to make the water level in the water tank at the highest level, and the photovoltaic surplus power generation is used for heating, and the water temperature heating target temperature is Tw_set. When the water temperature reaches the target temperature Tw_set, Ppv_1 ≥ Php, then the target temperature is adjusted to Tw_ref, and the water temperature continues to be heated. When Ppv_1 < Php_start, surplus photovoltaic power generation is connected to the grid. When photovoltaic power generation power Ppv < Pload, photovoltaic power generation is connected to the grid, and the household's immediate load energy demand is met by the power grid.
(2) During the period from 10:00 a.m. to 14:00 p.m., the photovoltaic power generation is at its maximum, and the household instantaneous load energy demand is first met. If the heat pump water heater has been started and the target heating temperature is Tw_set, the target temperature is adjusted to Tw_ref and heating continues. If the heat pump water heater has been started and the target heating temperature is Tw_ref, the target temperature is maintained and heating continues. If the heat pump water heater has not been started, if Ppv_1≥max (Php_start, Php), the heat pump water heater is started and heating is performed according to the target water temperature Tw_ref. When the water temperature reaches the target temperature, or Ppv_1 <Php, the heat pump water heater is shut down.
   When Ppv_2>0, it indicates that there is a photovoltaic surplus. If the washer-dryer and electric vehicle have no electricity plan within a day, the photovoltaic surplus will be connected to the grid until the photovoltaic power generation stops. If only the washer-dryer is scheduled to use electricity, when Ppv_2> Pwm and Qpv_1> Qwm, the operation time of the washer-dryer will be advanced from the planned normal power supply period (19:00 p.m. -24:00 p.m.) to the current photovoltaic maximum power generation period (10:00 a.m. - 14:00 p.m.). After the washer-dryer ends its operation or the washer-dryer does not meet the electric energy migration conditions, the photovoltaic surplus power will be connected to the grid. If only electric vehicles are scheduled for charging, the charging time of the electric vehicles will be advanced from the planned charging period (00:00 am -08:00 am) to the current photovoltaic maximum power generation period (10:00 a.m. - 14:00 p.m.). When Ppv_2> Pev, the electric vehicles will be charged according to Pev. When Ppv_2< Pev, the electric vehicles will be charged according to Ppv_2. When the electric vehicles are fully charged, if there is still a surplus in photovoltaic power, they will be connected to the grid. If the electric vehicles are not fully charged and the photovoltaic power stops generating electricity, the charging of the electric vehicles will be stopped. For example, if both the washer-dryer and electric vehicle have electricity usage plans, when Ppv_2> Pwm and Qpv_1> Qwm, the operating time of the washer-dryer will be advanced from the planned normal power supply period (19:00 p.m.-24:00 p.m.) to the current photovoltaic maximum power generation period (10:00 a.m. - 14:00 p.m.). If Ppv_3> 0, the electric vehicle charging time will be advanced from the planned charging period (00:00 am-08:00 am) to the current photovoltaic maximum power generation period (10:00 a.m. - 14:00 p.m.). When the washer-dryer ends its operation or the electricity migration conditions are not met, the photovoltaic surplus power will be executed according to the situation where only the electric vehicle is scheduled to charge.
(3) 14:00 p.m. - 18:00 p.m., photovoltaic power generation gradually decreases. If the heat pump water heater is operating, it means that the power generated during the maximum photovoltaic power generation period cannot meet the heat storage demand of the heat pump water heater, and load migration is not considered at this time. If the washer-dryer is operating or the electric vehicle is charging, the photovoltaic surplus logic is executed according to the 10:00 a.m. - 14:00 p.m. period.

Description of the above symbols: Qpv: photovoltaic power generation forecast for the whole day; Qload: household daytime instant power consumption (such as lighting, fans, etc.); Qhp_start: power consumption when the heat pump water heater starts successfully; Qhp: power demand for energy storage in the water tank; Qwm: planned power consumption of the washer-dryer; Qev: estimated charging amount of electric vehicles; Tw_set: user-set water temperature of the heat pump water heater; Ppv: real-time photovoltaic power generation; Pload: household daytime instant power consumption (such as lighting, fans, etc.); Php_start: heat pump water heater start power; Php: heat pump water heater operating power; Pwm: washer-dryer operating power; Pev: electric vehicle charging power; Tw_ref: maximum heating water temperature of the heat pump water heater; Photovoltaic surplus Ppv_1= Ppv - Pload, photovoltaic surplus Ppv_2 = Ppv_1 - Php, photovoltaic surplus Ppv_3= Ppv_2 - Pwm, photovoltaic surplus power Qpv_1 = Qpv - Qload - Qhp.

In the present application, when the photovoltaic power generation period is a photovoltaic effective period, a first electric energy strategy is determined according to the current time information. A first load object is determined according to the first electric energy strategy; and the first load object is controlled according to the first electric energy strategy to complete electric energy migration. By associating time with photovoltaic power generation efficiency, using time information to deploy the use of load objects, and using household electrical appliances to complete the transfer of photovoltaic power, the maximum utilization of photovoltaic power generation is achieved and waste is avoided.

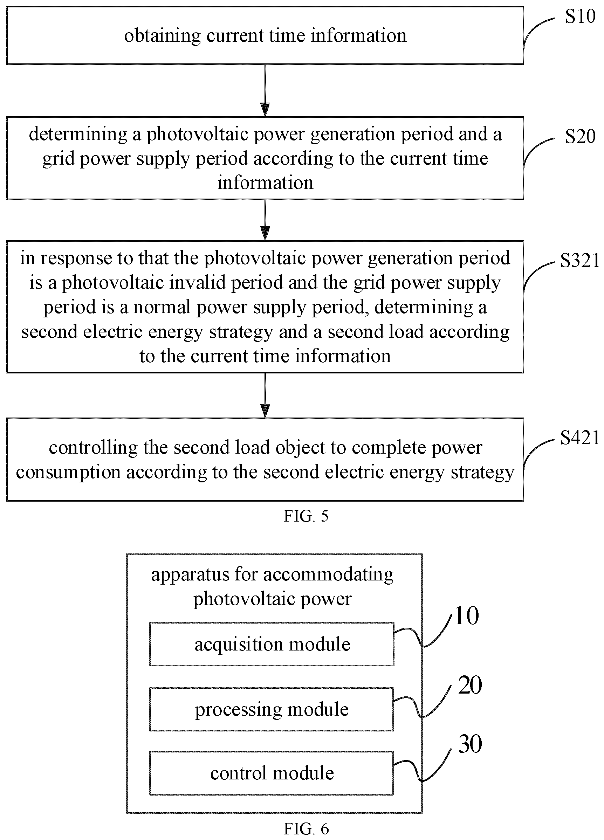

As shown in FIG. 5, which is a schematic flowchart of the method for accommodating photovoltaic power according to the second embodiment of the present application.

Based on the first embodiment described above, the step S30 of the method for accommodating photovoltaic power of the present application further includes:
Step S321: in response to that the photovoltaic power generation period is a photovoltaic invalid period and the grid power supply period is a normal power supply period, determining a second electric energy strategy and a second load according to the current time information.

It should be noted that when the photovoltaic power generation period is a photovoltaic effective period, the photovoltaic power accommodation is used to reduce the amount of power drawn from the power grid. When the photovoltaic power generation period is a photovoltaic ineffective period, power supply from the power grid is considered.

It can be understood that the normal power supply period here refers to the period when the power grid can supply power. Generally, the normal power supply period is all-day power supply, but it cannot be ruled out that some regions have staged power supply due to tight power supply. Therefore, the power supply distribution of the power grid can only be controlled according to the current time information when there is power supply in the power grid.

It should be noted that the second energy strategy is determined according to the current time information when the power supply period of the power grid is the normal power supply period, the second energy strategy is an energy strategy for controlling the load to absorb energy. Energy absorption refers to the strategy of consuming energy of electrical appliances. The difference between energy absorption and energy migration is that energy migration converts the energy of photovoltaic power generation into other energy for storage, while energy absorption directly uses the electricity of the power grid, for example: executing planned tasks for the dryer-washer function or charging electric vehicles through the power grid.

In an embodiment, the time information here is to query the current level of power grid electricity price, whether it is parity electricity, low-priced electricity or high-priced electricity. The relationship between electricity price and time is different in different regions. Therefore, the present application does not limit the classification of electricity prices and the relationship between electricity prices and time.

In an embodiment, when the current time is a normal power supply period, household load information and grid period information are determined according to the current time information; and a second electric energy strategy is determined according to the household load information and grid period information.

It should be noted that the current grid electricity price level, i.e., grid time period information, is queried according to the current time information, and reasonable control parameters are generated according to the grid time period information and household load demand to intervene in the use and settings of electrical appliances to achieve high economic efficiency of electricity use.

In an embodiment, when the grid period information is a grid parity period, a load plan for each electrical appliance is determined according to the household load information; and a second electric energy strategy is generated according to the load plan for each electrical appliance.

It is understood that when the grid period is parity electricity, household electricity consumption is generally not at peak. By adjusting the load plan of each appliance, the planned electricity consumption can be staggered with the peak load period. For example, assuming that the family has a scheduled automatic drying and washing task, automatic dishwashing task, disinfection task, etc., it is determined whether the plan is in a period with higher electricity prices. If so, it can be executed first when the electricity price is cheap. Here, photovoltaic power generation can be used for load first, and when photovoltaic power generation cannot be generated, parity electricity or valley electricity is used for load first. For example: in the night scene, photovoltaic power can no longer function, so that the load is operated through the parity electricity period. During the night grid parity electricity price period, hot water, washer-dryers, etc. are operated; and the vehicles are charged. Grid parity electricity price period: if the planned electricity consumption of the washer-dryer is not executed, the washer-dryer is operated. If hot water is needed, it is supplied by the hot water stored during the day; if it is still not satisfied, it is supplemented by electric heat conversion by the grid power. Grid valley electricity price period: whether the electric vehicle is charged through photovoltaic power during the day is determined. If the electric vehicle is not charged through photovoltaic power during the day, the electric vehicle is charged. If it has been executed, whether it is fully charged is determined. If not, continue to charge the electric vehicle.

It should be noted that, according to the second electric energy strategy described above, which load objects are to be operated in which time period can be determined, or the second load object can be directly determined according to the current time information. The second load object can be identical to the first load object or different from the first load object.

In some embodiments, the power demand information and grid period information of the second load object are determined according to the current time information; and the second electric energy strategy is determined according to the power demand information and the grid period information. The grid period information includes, for example, a grid parity electricity price period, a grid peak electricity price period, and a grid valley electricity price period. The power demand information of the second load object includes whether the second load object needs electricity.

In some embodiments, the photovoltaic power accommodation information of the second load object is obtained, and the power demand information is determined according to the photovoltaic power accommodation information of the second load object. The photovoltaic power accommodation information of the second load object may include whether the second load object has completed photovoltaic power accommodation. For example, if the second load object fails to complete photovoltaic power accommodation during the day, there is a demand for electricity during the photovoltaic ineffective period. For heat pump water heaters and energy storage loads, the second load object fails to complete photovoltaic power accommodation, including never starting, or starting but not meeting the hot water temperature requirements or not fully charged.

In some embodiments, when the grid period information is a grid parity period or a grid valley period, the second electric energy strategy is determined according to the usage information of the second load object. The usage information of the second load object includes, for example, the usage time of the second load object. The grid parity period or the grid valley period can be selected within the usage time period of the second load object or before the usage time to operate the second load object, thereby meeting the usage demand and the electricity economy demand.

In some embodiments, the second load object includes at least one of a heat pump water heater, a portable energy storage load, and a portable consumption load. The second electric energy strategy is determined according to the usage information of the second load object, including: if the second load object is a heat pump water heater and/or a consumption load, the eighth operation strategy of the second load object in the grid parity period is determined according to the usage information of the second load object. The eighth operation strategy may include operating the heat pump water heater and/or the consumption load within the usage time period of the second load object or in the grid parity period before the usage time, for example, when the heat pump water heater is not started during the photovoltaic effective period/is started but does not meet the hot water temperature requirement, and the consumption load is not started during the photovoltaic effective period, it is started or supplemented by the power supply of the grid during the grid parity period. For heat pump water heaters and consumption loads, their usual usage time may be 19:00 p.m. - 24:00 p.m., and the time period from 14:00 p.m. - 19:00 p.m. within or before their usage time range is the grid parity period, then the operation time of the heat pump water heater and the consumption load may be set to 14:00 p.m. - 19:00 p.m. If the second load object is an energy storage load, the ninth operation strategy of the second load object during the grid valley price period is determined according to the usage information of the second load object. The ninth operation strategy includes charging or supplying power to the energy storage load within the usage time range of the energy storage load, for example, the energy storage load such as the charging pile is usually used during 00:00 am - 08:00 am, and this time period is the valley price period, and it can be charged during the valley price period.

Step S421: controlling the second load object to complete power consumption according to the second electric energy strategy.

It should be noted that the second electricity strategy described above can be used to consume electricity for the second load object, that is, to achieve maximum electricity storage according to photovoltaic power generation when the sun is abundant during the day, and to complete electricity consumption through the most economical electricity price according to energy storage or electricity consumption plans that are not completed through photovoltaics during the day.

In this application, when the power supply period of the power grid is a normal power supply period, the second electric energy strategy is determined according to the current time information; the second load object is determined according to the second electric energy strategy; and the second load object is controlled according to the second electric energy strategy to complete power accommodation. Through the above method, the time is associated with the power price of the power grid, and at night, the photovoltaic storage energy is used to supply hot water, washer-dryers and other electrical appliances to minimize the use of different price periods of the power grid, so as to achieve the economy of nighttime energy consumption.

In addition, an embodiment of the present application further provides a storage medium, on which a program for accommodating photovoltaic power is stored. When the program for accommodating photovoltaic power is executed by a processor, the steps of the method for accommodating photovoltaic power described above are implemented.

As shown in FIG. 6, which is a structural block diagram of an apparatus for accommodating photovoltaic power according to a first embodiment of the present application.

As shown in FIG. 6, the apparatus for accommodating photovoltaic power provided in the embodiment of the present application includes:
an acquisition module 10 configured to obtain current time information;
a processing module 20 configured to determine a photovoltaic power generation period and a grid power supply period according to the current time information; and further determine a load object and an electric energy strategy according to the photovoltaic power generation period and/or the grid power supply period; and
a control module 30 configured to control the load object to complete photovoltaic power accommodation and/or grid power consumption control according to the electric energy strategy.

It should be understood that the above is only an example and does not constitute any limitation on the technical solution of the present application. In specific applications, those skilled in the art can make settings as needed, and the present application does not impose any restrictions on this.

The acquisition module of the present application obtains the current time information; the processing module 20 determines the photovoltaic power generation period and the grid power supply period according to the current time information; the processing module 20 determines the load object and the electric energy strategy according to the photovoltaic power generation period and/or the grid power supply period; the control module 30 controls the load object to complete the electric energy consumption and/or electric energy migration according to the electric energy strategy. Through the above solution, time is associated with power generation and power consumption, and then the household power load is controlled with time as the control parameter, so that the household power load matches the power generation and grid power supply to achieve the best results in energy saving and economy, achieve the goal of energy saving, and improve the economy of household electricity consumption.

In an embodiment, the processing module 20 is further configured to in response to that the photovoltaic power generation period is a photovoltaic effective period, determine a first electric energy strategy according to the current time information;
in response to that the photovoltaic power generation period is a photovoltaic effective period, determine a first electric energy strategy and a first load object according to the current time information; and
the controlling the load object according to the electric energy strategy to complete photovoltaic power accommodation and/or grid power consumption control includes:
   controlling the first load object according to the first electric energy strategy to complete photovoltaic power accommodation.

In an embodiment, the processing module 20 is further configured to in response to that the photovoltaic power generation period is a photovoltaic effective period, obtain current photovoltaic power generation information and current load information; and
determining the first electric energy strategy according to the photovoltaic power generation information and the current load information.

In an embodiment, the processing module 20 is further configured to determine a first electric energy strategy according to the photovoltaic power generation information and the current load information, including:
determining first photovoltaic surplus information according to the photovoltaic power generation information and the current load information;
in response to that the first photovoltaic surplus information indicates a photovoltaic surplus, determining the first electric energy strategy according to the first photovoltaic surplus information and startup or operation condition information of the heat pump water heater, the first electric energy strategy includes whether to start the heat pump water heater.

In an embodiment, the processing module 20 is further configured to: when starting the heat pump water heater:
in response to starting the heat pump water heater:
during the photovoltaic power generation growth period, determining a first operation strategy of the heat pump water heater according to preset parameters of the heat pump water heater, and determining a second operation strategy of the heat pump water heater according to maximum parameters of the heat pump water heater after reaching the preset parameters of the heat pump water heater;
during the photovoltaic power generation high-efficiency period, determining a third operation strategy of the heat pump water heater according to the maximum parameters of the heat pump water heater; and
the determining the first electric energy strategy according to the photovoltaic power generation information and the current load information further includes:
   during the photovoltaic power generation decay period, stopping photovoltaic power accommodation for the heat pump water heater.

In an embodiment, the processing module 20 is further configured to determine second photovoltaic surplus information according to the first photovoltaic surplus information and the startup or operation condition information of the heat pump water heater;
in response to that the second photovoltaic surplus information indicates a photovoltaic surplus, determine the first electric energy strategy according to the second photovoltaic surplus information and startup or operation condition information of the migratable load, the first electric energy strategy includes whether to start the migratable load.

In an embodiment, the processing module 20 is further configured to during the photovoltaic power generation growth period, stop photovoltaic power accommodation for the migratable load; and
during the photovoltaic power generation decay period, in response to that the first photovoltaic surplus information indicates a photovoltaic surplus, determine the first electric energy strategy according to the first photovoltaic surplus information and the startup or operation condition information of the migratable load, the first electric energy strategy includes whether to start the migratable load.

In an embodiment, the processing module 20 is further configured to in response to that the migratable load is an energy storage load, determine a fourth operation strategy of the energy storage load according to the second photovoltaic surplus information and rated operation parameters of the energy storage load;
in response to that the migratable load is a consumption load, determine a fifth operation strategy of the consumption load according to the second photovoltaic surplus information, operation parameters of the consumption load, and planned power consumption of the consumption load; and
in response to that the migratable load is both a consumption load and an energy storage load, determine a sixth operation strategy of the consumption load according to the second photovoltaic surplus information, the operation parameters of the consumption load, and the planned power consumption of the consumption load; determine third photovoltaic surplus information according to the second photovoltaic surplus information and the operation parameters of the consumption load; and in response to that the third photovoltaic surplus information indicates a photovoltaic surplus, determine a seventh operation strategy of the energy storage load according to the third photovoltaic surplus information and the rated operation parameters of the energy storage load.

In an embodiment, the processing module 20 is further configured to in response to that the photovoltaic power generation period is a photovoltaic invalid period and the grid power supply period is a normal power supply period, determine a second electric energy strategy and a second load object according to the current time information; and
the controlling the load object according to the electric energy strategy to complete photovoltaic power accommodation and/or grid power consumption control includes:
controlling the second load object according to the second electric energy strategy to complete grid power consumption control.

In an embodiment, the processing module 20 is further configured to determine power demand information and grid time period information of the second load object according to the current time information; and
determine the second electric energy strategy according to the power demand information and the grid time period information.

In an embodiment, the processing module 20 is further configured to obtain the photovoltaic power accommodation information of the second load object and determine the power demand information according to photovoltaic power accommodation information of the second load object.

In an embodiment, the processing module 20 is further configured to in response to that the grid time period information indicates a grid parity period or a grid valley period, determine the second electric energy strategy according to usage information of the second load object.

In an embodiment, the processing module 20 is further configured to in response to that the second load object is a heat pump water heater and/or a consumption load, determine an eighth operation strategy of the second load object during the grid parity period according to the usage information of the second load object; and
in response to that the second load object is an energy storage load, determine a ninth operation strategy of the second load object during the grid valley period according to the usage information of the second load object.

It should be noted that the workflow described above is merely illustrative and does not limit the scope of protection of the present application. In practical applications, those skilled in the art can select part or all of it according to actual needs to achieve the purpose of the technical solution of the present application, and no limitation is made here.

In addition, for technical details that are not described in detail, please refer to the method for accommodating photovoltaic power provided in any embodiment of the present application, which will not be repeated here.

In addition, it should be noted that, in this document, the terms "include", "comprise" or any other variations thereof are intended to cover a non-exclusive inclusion, such that a process, method, article or system that includes a series of elements not only includes those elements, it further includes other elements not expressly listed or inherent in the process, method, article or system. Without further limitation, an element defined by the statement "comprises a..." does not exclude the presence of additional identical elements in a process, method, article or system that includes that element.

The above serial numbers of the embodiments of the present application are only for description and do not represent the advantages and disadvantages of the embodiments.

Through the above description of the embodiments, those skilled in the art can clearly understand that the methods of the above embodiments can be implemented by means of software plus the necessary general hardware platform. Of course, it can also be implemented by hardware, but in many cases the former is better implementation. Based on this understanding, the technical solution of the present application can be embodied in the form of a software product in essence or the part that contributes to the related art. The computer software product is stored in a storage medium (such as read-only memory (ROM)/RAM, disk, compact disc (CD)), including several instructions for a terminal device (which can be a mobile phone, computer, server, air conditioner, or network device, etc.) to execute the methods described in various embodiments of the present application.

The above descriptions are only some embodiments of the present application, and do not limit the scope of the present application. Any equivalent structural transformations made using the contents of the description and drawings of the present application, or direct/indirect application in other related technical fields, are included in the scope of the present application.

## Claims

1. A method for accommodating photovoltaic power, comprising:
obtaining current time information;
determining a photovoltaic power generation period and a grid power supply period according to the current time information;
determining a load object and an electric energy strategy according to the photovoltaic power generation period and/or the grid power supply period; and
controlling the load object according to the electric energy strategy to complete photovoltaic power accommodation and/or grid power consumption control.

2. The method of claim 1, wherein said determining the load object and the electric energy strategy according to the photovoltaic power generation period and/or the grid power supply period comprises:
in response to that the photovoltaic power generation period is a photovoltaic effective period, determining a first electric energy strategy and a first load object according to the current time information, and
wherein said controlling the load object according to the electric energy strategy to complete photovoltaic power accommodation and/or grid power consumption control comprises:
controlling the first load object according to the first electric energy strategy to complete photovoltaic power accommodation.

3. The method of claim 2, wherein said in response to that the photovoltaic power generation period is the photovoltaic effective period, determining the first electric energy strategy and the first load object according to the current time information comprises:
in response to that the photovoltaic power generation period is the photovoltaic effective period, obtaining current photovoltaic power generation information and current load information; and
determining the first electric energy strategy according to the photovoltaic power generation information and the current load information.

4. The method of claim 3, wherein the first load object comprises a heat pump water heater, and
wherein said determining the first electric energy strategy according to the photovoltaic power generation information and the current load information comprises:
determining first photovoltaic surplus information according to the photovoltaic power generation information and the current load information; and
in response to that the first photovoltaic surplus information indicates a photovoltaic surplus, determining the first electric energy strategy according to the first photovoltaic surplus information and startup or operation condition information of the heat pump water heater, wherein the first electric energy strategy comprises whether to start the heat pump water heater.

5. The method of claim 4, wherein the photovoltaic effective period comprises at least one of a photovoltaic power generation growth period, a photovoltaic power generation high-efficiency period, and a photovoltaic power generation decay period, and
wherein said determining the first electric energy strategy according to the first photovoltaic surplus information and the startup or operation condition information of the heat pump water heater comprises in response to starting the heat pump water heater:
during the photovoltaic power generation growth period, determining a first operation strategy of the heat pump water heater according to preset parameters of the heat pump water heater, and determining a second operation strategy of the heat pump water heater according to maximum parameters of the heat pump water heater after reaching the preset parameters of the heat pump water heater; and
during the photovoltaic power generation high-efficiency period, determining a third operation strategy of the heat pump water heater according to the maximum parameters of the heat pump water heater, and
wherein said determining the first electric energy strategy according to the photovoltaic power generation information and the current load information further comprises:
during the photovoltaic power generation decay period, stopping photovoltaic power accommodation for the heat pump water heater.

6. The method of claim 5, wherein the first load object further comprises a migratable load, and the migratable load comprises at least one of an energy storage load and a consumption load, and
wherein said determining the first electric energy strategy according to the first photovoltaic surplus information and the startup or operation condition information of the heat pump water heater comprises
during the photovoltaic power generation high-efficiency period:
determining second photovoltaic surplus information according to the first photovoltaic surplus information and the startup or operation condition information of the heat pump water heater; and
in response to that the second photovoltaic surplus information indicates a photovoltaic surplus, determining the first electric energy strategy according to the second photovoltaic surplus information and startup or operation condition information of the migratable load, wherein the first electric energy strategy comprises whether to start the migratable load.

7. The method of claim 5, wherein said determining the first electric energy strategy according to the photovoltaic power generation information and the current load information further comprises:
during the photovoltaic power generation growth period, stopping photovoltaic power accommodation for the migratable load; and
during the photovoltaic power generation decay period, in response to that the first photovoltaic surplus information indicates a photovoltaic surplus, determining the first electric energy strategy according to the first photovoltaic surplus information and the startup or operation condition information of the migratable load, wherein the first electric energy strategy comprises whether to start the migratable load.

8. The method of claim 6, wherein said determining the first electric energy strategy according to the second photovoltaic surplus information and the startup or operation condition information of the migratable load comprises:
in response to that the migratable load is an energy storage load, determining a fourth operation strategy of the energy storage load according to the second photovoltaic surplus information and rated operation parameters of the energy storage load;
in response to that the migratable load is a consumption load, determining a fifth operation strategy of the consumption load according to the second photovoltaic surplus information, operation parameters of the consumption load, and planned power consumption of the consumption load; and
in response to that the migratable load is both a consumption load and an energy storage load,
determining a sixth operation strategy of the consumption load according to the second photovoltaic surplus information, the operation parameters of the consumption load, and the planned power consumption of the consumption load;
determining third photovoltaic surplus information according to the second photovoltaic surplus information and the operation parameters of the consumption load; and
in response to that the third photovoltaic surplus information indicates a photovoltaic surplus, determining a seventh operation strategy of the energy storage load according to the third photovoltaic surplus information and the rated operation parameters of the energy storage load.

9. The method of any one of claims 1 to 8, wherein said determining the load object and the electric energy strategy according to the photovoltaic power generation period and/or the grid power supply period comprises:
in response to that the photovoltaic power generation period is a photovoltaic invalid period and the grid power supply period is a normal power supply period, determining a second electric energy strategy and a second load object according to the current time information, and
wherein said controlling the load object according to the electric energy strategy to complete photovoltaic power accommodation and/or grid power consumption control comprises:
controlling the second load object according to the second electric energy strategy to complete grid power consumption control.

10. The method of claim 9, wherein said determining the second electric energy strategy and the second load object according to the current time information comprises:
determining power demand information and grid time period information of the second load object according to the current time information; and
determining the second electric energy strategy according to the power demand information and the grid time period information.

11. The method of claim 10, wherein said determining the power demand information and the grid time period information of the second load object according to the current time information comprises:
obtaining photovoltaic power accommodation information of the second load object and determining the power demand information according to photovoltaic power accommodation information of the second load object.

12. The method of claim 10, wherein said determining the second electric energy strategy according to the power demand information and the grid time period information comprises:
in response to that the grid time period information indicates a grid parity period or a grid valley period, determining the second electric energy strategy according to usage information of the second load object.

13. The method of claim 12, wherein the second load object comprises at least one of a heat pump water heater, a migratable energy storage load, and a migratable consumption load, and
wherein said determining the second electric energy strategy according to the usage information of the second load object comprises:
in response to that the second load object is a heat pump water heater and/or a consumption load, determining an eighth operation strategy of the second load object during the grid parity period according to the usage information of the second load object; and
in response to that the second load object is an energy storage load, determining a ninth operation strategy of the second load object during the grid valley period according to the usage information of the second load object.

14. An apparatus for accommodating photovoltaic power, comprising:
an acquisition module, configured to obtain current time information;
a processing module, configured to determine a photovoltaic power generation period and a grid power supply period according to the current time information, and determine a load object and an electric energy strategy according to the photovoltaic power generation period and/or the grid power supply period; and
a control module, configured to control the load object to complete photovoltaic power accommodation and/or grid power consumption control according to the electric energy strategy.

15. A device for accommodating photovoltaic power, comprising:
a memory;
a processor; and
a program for accommodating photovoltaic power stored in the memory and executable on the processor, wherein the program is configured to implement the steps of the method for accommodating photovoltaic power of any one of claims 1 to 13.

16. A storage medium, wherein a program for accommodating photovoltaic power is stored on the storage medium, and when executed by a processor, the program implements the steps of the method for accommodating photovoltaic power of any one of claims 1 to 13.
